# EUROPEAN PATENT APPLICATION

(11) **EP 4 502 421 A1**
(43) Date of publication of application: **05.02.2025**
(21) Application number: 23780468.7
(22) Date of filing: 28.03.2023
(51) Int. Cl.: F16H 25/20, B60T 13/138, F16H 25/22

(54) **HYDRAULIC PRESSURE GENERATION DEVICE**

(30) Priority: 30.03.2022 JP 2022056826; 30.03.2022 JP 2022056828
(71) Applicant: Hitachi Astemo Ueda Co., Ltd., Ueda-shi, Nagano 386-0016 (JP)
(72) Inventor: MIWA, Shoichi, Ueda-shi, Nagano 386-0016 (JP)
(74) Representative: Weickmann & Weickmann PartmbB
(86) International application number: PCT/JP2023/012401
(87) International publication number: WO 2023/190459

(57) **Abstract**

This hydraulic pressure generation device is provided with an electric brake device that advances a second slave piston (23b) within a cylinder hole (22). The electric brake device comprises a ball screw structure (27) that converts rotational drive force of a motor (26) into rectilinear axial force and transmits same to the second slave piston (23b). The ball screw structure (27) comprises a detent mechanism unit (35) for a ball screw shaft (27a). The detent mechanism unit (35) comprises: an axial groove (36) that is formed in a sliding surface (22b) of the cylinder hole (22); and a rotation-regulating member (37) that is provided on the ball screw shaft (27a). A radially outer end section (39a) of the rotation-regulating member (37) is disposed within the axial groove (36). With this configuration, the detent mechanism unit (35) can be provided on the front side of a shaft member, and an increase in the axial length of the cylinder hole (22) can be suppressed.

## Description

### TECHNICAL FIELD

The present invention relates to a hydraulic pressure generation device.

### BACKGROUND ART

An electric actuator used in vehicles and the like is known (for example, see Patent Literature 1). This electric actuator includes a drive transmitter including a nut member which is rotated by a motor and a shaft member which is screwed into the nut member and is moved in an axial direction by the rotation of the nut member.

The electric actuator described in Patent Literature 1 is provided with a detent mechanism unit for preventing the shaft member from being co-rotated by the rotation of the nut member. Specifically, a pin for preventing co-rotation of the shaft member is provided on the rear side, that is, the proximal end side of the shaft member in such a manner as to penetrate in a radial direction of the shaft member. In addition, a slide groove which supports an end portion of the pin such that the pin can move along an axial direction of the shaft member is provided in a housing which houses the drive transmitter.

### CITATION LIST

### Patent Literature

Patent Literature 1: JP2014-37854A

### SUMMARY OF INVENTION

### Technical Problem

However, since the detent mechanism unit is provided on the rear side of the shaft member, the electric actuator described in Patent Literature 1 has a shape in which a portion of the housing or the like which is located behind the shaft member bulges outward. For this reason, there is a possibility that the degree of freedom in layout of other members is impaired, for example.

On the other hand, it is also conceivable to provide a detent mechanism unit on the front side of a shaft member in an electric actuator. However, when a hydraulic pressure generation device is configured by applying such an electric actuator to an electric brake device in which a piston is caused to advance in a cylinder hole by the movement of the shaft member, the axial length of the cylinder hole increases.

In view of this, an object of the present invention is to provide a hydraulic pressure generation device in which a detent mechanism unit can be provided on the front side of a shaft member, and an increase in axial length of a cylinder hole can be suppressed.

### Solution to Problem

The present invention for solving the above problem is a hydraulic pressure generation device comprising: a base; and an electric brake device. A motor is attached to the base. The electric brake device generates a brake hydraulic pressure by causing a piston to advance in a cylinder hole formed in the base by using the motor as a drive source. The electric brake device includes a drive transmitter which converts a rotational drive force of the motor into an axial force in a linear direction and transmits the axial force to the piston. The drive transmitter includes: a nut member; a shaft member; and a detent mechanism unit. The nut member rotates upon receipt of the rotational drive force of the motor. The shaft member is provided to be screwed into the nut member and capable of moving in an axial direction and abuts on the piston. The detent mechanism unit prevents rotation of the shaft member. The detent mechanism unit includes: an axial groove which is formed, along the axial direction, in a sliding surface of the cylinder hole in which the piston slides; and a rotation-regulating member which is provided on the shaft member. A radially outer end portion of the rotation-regulating member is disposed in the axial groove.

In this configuration, the shaft member is moved in the axial direction by the rotation of the nut member, and co-rotation of the shaft member is prevented by the detent mechanism unit provided on the front side of the shaft member. Then, since the radially outer end portion of the rotation-regulating member provided on the shaft member is passed through the axial groove formed, along the axial direction, in the sliding surface of the cylinder hole, an increase in axial length of the cylinder hole can be suppressed.

Therefore, the present invention can provide a hydraulic pressure generation device in which a detent mechanism unit can be provided on the front side of a shaft member, and an increase in axial length of a cylinder hole can be suppressed.

Moreover, the axial groove is formed, along the axial direction, in the sliding surface of the cylinder hole. With this configuration, since the piston can be held on a portion where no axial groove is formed in the sliding surface of the cylinder hole, it is possible to suppress tilting of the piston and thus suppress abrasion.

In the hydraulic pressure generation device, the axial groove is formed in a recess shape in part of the sliding surface of the cylinder hole in the axial direction.

In this configuration, since a more region where the piston is held by the sliding surface of the cylinder hole can be obtained, it is possible to further suppress the tilting of the piston.

In the hydraulic pressure generation device, it is preferable that a guided portion be formed, along the axial direction, in the radially outer end portion of the rotation-regulating member. In this case, it is preferable that the detent mechanism unit include a guide pin which is disposed in the axial groove along the axial direction and guides the rotation-regulating member in the axial direction with the guide pin at least partly entering the guided portion.

In this configuration, the guide pin can prevent the rotation of the shaft member by at least partly entering the guided portion of the rotation-regulating member provided on the shaft member.

In the hydraulic pressure generation device, it is preferable that the guide pin be disposed in a recess-shaped installation groove which is formed in the axial groove along the axial direction.

In this configuration, the guide pin can be disposed inside the axial groove having the minimum size, and can be stably set in the installation groove formed in the axial groove.

In the hydraulic pressure generation device, it is preferable that a front end portion of the guide pin be inserted in a hole which is formed in the base along the axial direction.

In this configuration, one end portion of the guide pin can be supported, and the guide pin can be positioned by restricting forward movement of the guide pin.

In the hydraulic pressure generation device, it is preferable that an end surface of a rear end portion of the guide pin be arranged to face a side surface of an outer race of a bearing which rotatably supports the nut member.

In this configuration, the guide pin can be positioned by restricting backward movement of the guide pin.

In the hydraulic pressure generation device, it is preferable that a pair of the axial grooves be formed at positions opposite to each other in the sliding surface of the cylinder hole, and a pair of the radially outer end portions of the rotation-regulating member be formed corresponding to the pair of axial grooves.

In this configuration, the shaft member can be effectively and well-balancedly prevented from co-rotating with the rotation of the nut member.

In the hydraulic pressure generation device, it is preferable that a clearance portion in a radial direction be provided between an inner surface of the guided portion and the guide pin. The clearance portion forms a space in the radial direction between the inner surface of the guided portion and the guide pin in a case where the inner surface of the guided portion and the guide pin approach and come into contact with each other in the radial direction.

In this configuration, the clearance portion provided between the inner surface of the guided portion and the guide pin can provide a place for a grease reservoir. Therefore, since it becomes possible to hold grease with the clearance portion when the guided portion and the guide pin slide, stack (sticking) can be more surely avoided.

Therefore, according to this invention, stack between members which slide in a detent mechanism unit can be more surely avoided.

In the hydraulic pressure generation device, it is preferable that the guided portion be a recess-shaped guided groove which is formed in an end surface of the radially outer end portion of the rotation-regulating member. In this case, it is preferable that a recess-shaped cutout groove be formed in an inner surface of the guided groove along the axial direction. In this case, the clearance portion is formed by the cutout groove.

In this configuration, since it becomes possible to hold grease with the cutout groove, stack can be more surely avoided.

In addition, since stack can be more surely avoided, the degree of freedom in design about the abutting between the guide pin and the rotation-regulating member increases. This makes it possible to adjust the gap between these, as well as, the position and angle at which these abut on each other. Moreover, reduction in size and improvement in abrasion resistance of the product can be achieved by adjusting the abutting angle between these.

In the hydraulic pressure generation device, it is preferable that the inner surface of the guided portion be configured by connecting a plurality of arc surfaces each having a radius larger than a radius of the guide pin. In this case, the clearance portion is formed between a pair of the arc surfaces adjacent to each other and the guide pin.

In this configuration, since grease can be held between the pair of arc surfaces adjacent to each other and the guide pin, stack can be more surely avoided.

In addition, since stack can be more surely avoided, the degree of freedom in design about the abutting between the guide pin and the rotation-regulating member increases. This makes it possible to adjust the gap between these, as well as, the position and angle at which these abut on each other. Moreover, reduction in size and improvement in abrasion resistance of the product can be achieved by adjusting the abutting angle between these.

### Advantageous Effects of Invention

The present invention can provide a hydraulic pressure generation device in which a detent mechanism unit can be provided on the front side of a shaft member, and an increase in axial length of a cylinder hole can be suppressed.

### BRIEF DESCRIPTION OF DRAWINGS

FIG. 1 is a schematic configuration diagram of a vehicle brake system using a hydraulic pressure generation device according to an embodiment of the present invention.
FIG. 2 is a diagram showing a structure of the hydraulic pressure generation device.
FIG. 3 is a sectional view taken along line III-III of FIG. 2.
FIG. 4 is a sectional view taken along line IV-IV of FIG. 3.
FIG. 5A is an enlarged sectional view showing a clearance portion in a radial direction which is provided between an inner surface of a guided portion of a rotation-regulating member and a guide pin.
FIG. 5B is a sectional view showing a state where the rotation-regulating member is slightly rotated, so that the inner surface of the guided portion and the guide pin abut on each other.
FIG. 6 is an enlarged sectional view showing a clearance portion according to a modified embodiment.

### DESCRIPTION OF EMBODIMENTS

An embodiment of the present invention will be described in detail with reference to the drawings as appropriate.

In this embodiment, a case where the hydraulic pressure generation device of the present invention is applied to a vehicle brake system will be described as an example.

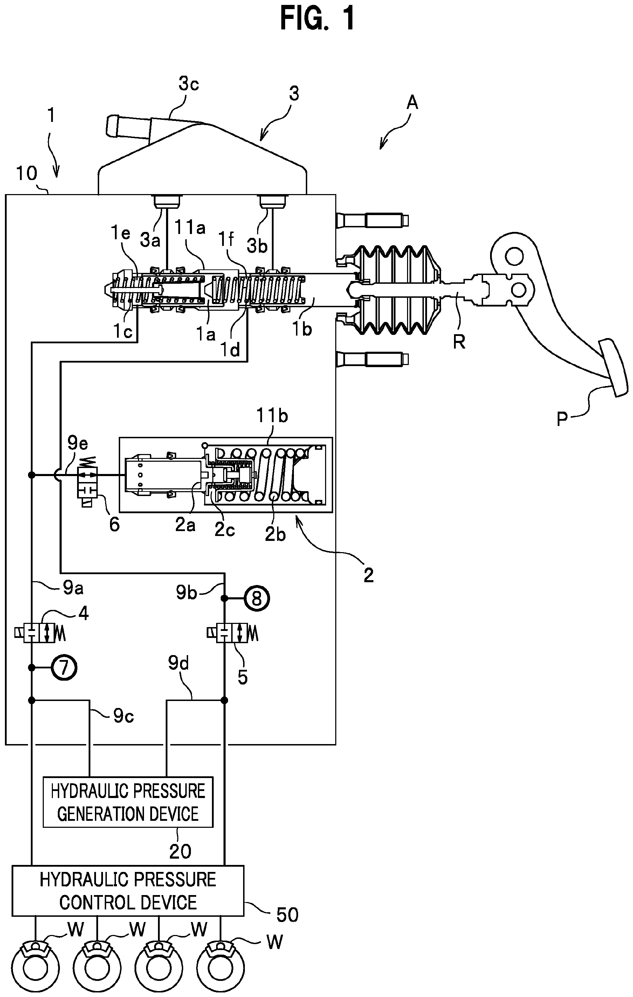

A vehicle brake system A shown in FIG. 1 is configured such that a by-wire brake system which is activated at the time of starting a prime mover (an engine, a motor, or the like) and a hydraulic brake system which is activated at the time of stopping the prime mover and the like function together. The vehicle brake system A includes a master cylinder 1, a stroke simulator 2, a hydraulic pressure generation device 20, and a hydraulic pressure control device 50. Then, the master cylinder 1, the stroke simulator 2, the hydraulic pressure generation device 20, and the hydraulic pressure control device 50 communicate with one another through external pipes.

A pair of main hydraulic pressure lines 9a, 9b are connected to the master cylinder 1. The main hydraulic pressure line 9a is equipped with a normally open shut-off valve (solenoid valve) 4 and a pressure sensor 7, and the main hydraulic pressure line 9b is equipped with a normally open shut-off valve (solenoid valve) 5 and a pressure sensor 8. In addition, a communication hydraulic pressure line 9c and a branch hydraulic pressure line 9e are branched from the main hydraulic pressure line 9a, and a communication hydraulic pressure line 9d is branched from the main hydraulic pressure line 9b.

The master cylinder 1 is of tandem type, and includes two master pistons (a first master piston 1a and a second master piston 1b). These two master pistons are housed in a first cylinder hole 11a formed inside a cylinder main body 10 and are arranged in series.

Among the two master pistons, the second master piston 1b is coupled to a push rod R to which a brake operating element (brake pedal P) is connected. In addition, the first master piston 1a is coupled to the second master piston 1b via a second return spring 1d. Moreover, a first return spring 1c is disposed between a bottom portion of the first cylinder hole 11a and the first master piston 1a.

In addition, in the first cylinder hole 11a, a first pressure chamber 1e is formed between the bottom portion and the first master piston 1a, and a second pressure chamber 1f is formed between the first master piston 1a and the second master piston 1b.

Brake pedal force of the brake pedal P is inputted to the second master piston 1b via the push rod R. When the brake pedal P is depressed, the second master piston 1b is displaced. Moreover, the brake pedal force inputted to the second master piston 1b is inputted to the first master piston 1a, so that the first master piston 1a is also displaced.

A brake fluid is pressurized in the first pressure chamber 1e and the second pressure chamber 1f by the displacements of the first master piston 1a and the second master piston 1b, so that a brake hydraulic pressure is generated in the brake fluid.

The brake hydraulic pressure generated in the first pressure chamber 1e is outputted from the main hydraulic pressure line 9a, and the brake hydraulic pressure generated in the second pressure chamber 1f is outputted from the main hydraulic pressure line 9b.

Thus, the master cylinder 1 is a device which generates brake hydraulic pressures by means of displacements of the two master pistons (the first master piston 1a and the second master piston 1b) in accordance with the amount of the depressing operation of the brake pedal P.

The stroke simulator 2 is a device which generates a pseudo operation reactive force in the brake pedal P which has been depressed, and is connected to the branch hydraulic pressure line 9e. The stroke simulator 2 includes a piston 2a which slides in a second cylinder hole 11b formed inside the cylinder main body 10 and two return springs (a first simulator spring 2b and a second simulator spring 2c) which bias the piston 2a.

The first simulator spring 2b has larger spring constant, shafting (the diameter of the coil spring), and wire diameter (the diameter of the wire material forming the first simulator spring 2b) than those of the second simulator spring 2c. In the stroke simulator 2, the piston 2a, the second simulator spring 2c, and the first simulator spring 2b are arranged in series in this order from the branch hydraulic pressure line 9e side.

In addition, the second cylinder hole 11b of the stroke simulator 2 communicates with the first pressure chamber 1e via the main hydraulic pressure line 9a and the branch hydraulic pressure line 9e, and is activated by the brake hydraulic pressure generated in the first pressure chamber 1e.

When the brake hydraulic pressure generated in the first pressure chamber 1e of the master cylinder 1 is inputted to the second cylinder hole 11b of the stroke simulator 2, the piston 2a is displaced. At this time, the second simulator spring 2c and the first simulator spring 2b are compressed in this order in accordance with the magnitude of the brake hydraulic pressure to generate a reactive force in the piston 2a. Then, the reactive force generated in the piston 2a is inputted to the master cylinder 1 via the branch hydraulic pressure line 9e and the main hydraulic pressure line 9a. The reactive force inputted to the master cylinder 1 is applied to the brake pedal P as the operation reactive force.

The master cylinder 1 is equipped with a reservoir 3. The reservoir 3 is a container which reserves the brake fluid, and includes oil filling ports 3a, 3b which are connected to the master cylinder 1 and a tube connection port 3c to which a hose extending from a main reservoir (not shown) is connected.

The normally open shut-off valves 4, 5 open and close the main hydraulic pressure lines 9a, 9b, and are each configured with a normally open-type solenoid valve. The normally open shut-off valve 4 opens and closes the main hydraulic pressure line 9a in a section extending from a branch point of the main hydraulic pressure line 9a and the branch hydraulic pressure line 9e to a branch point of the main hydraulic pressure line 9a and the communication hydraulic pressure line 9c. The normally open shut-off valve 5 opens and closes the main hydraulic pressure line 9b upstream of a branch point of the main hydraulic pressure line 9b and the communication hydraulic pressure line 9d.

A normally closed shut-off valve 6 opens and closes the branch hydraulic pressure line 9e, and is configured with a normally closed-type solenoid valve.

The pressure sensors 7, 8 are sensors which detect the brake hydraulic pressure generated in the master cylinder 1, and are attached to sensor-attachment holes (not shown) which communicate with the main hydraulic pressure lines 9a, 9b. The pressure sensor 7 is arranged downstream of the normally open shut-off valve 4. The pressure sensor 7 is configured to be capable of detecting the brake hydraulic pressure generated in brake fluid in the hydraulic pressure generation device 20 when the normally open shut-off valve 4 is in the closed state (i.e., the state in which the main hydraulic pressure line 9a is shut off). The pressure sensor 8 is arranged upstream of the normally open shut-off valve 5, and detects the brake hydraulic pressure generated in the master cylinder 1 when the normally open shut-off valve 5 is in the closed state (i.e., the state in which the main hydraulic pressure line 9b is shut off). The hydraulic pressures detected by the pressure sensors 7, 8 are converted into detection signals, which are inputted to an electronic control unit (ECU), which is not shown.

The main hydraulic pressure lines 9a, 9b are hydraulic pressure lines which start from the master cylinder 1. The main hydraulic pressure line 9a is connected to the first pressure chamber 1e, and the main hydraulic pressure line 9b is connected to the second pressure chamber 1f. In addition, the main hydraulic pressure lines 9a, 9b are each connected to the hydraulic pressure control device 50. The communication hydraulic pressure lines 9c, 9d are hydraulic pressure lines which are branched from the main hydraulic pressure lines 9a, 9b, and are each connected to the hydraulic pressure generation device 20.

The branch hydraulic pressure line 9e is a hydraulic pressure line which is branched from the main hydraulic pressure line 9a and reaches the stroke simulator 2.

The master cylinder 1 communicates with the hydraulic pressure control device 50 via the main hydraulic pressure lines 9a, 9b. Then, when the normally open shut-off valves 4, 5 are in the open state, the brake hydraulic pressure generated in the master cylinder 1 is inputted to the hydraulic pressure control device 50 via the main hydraulic pressure lines 9a, 9b.

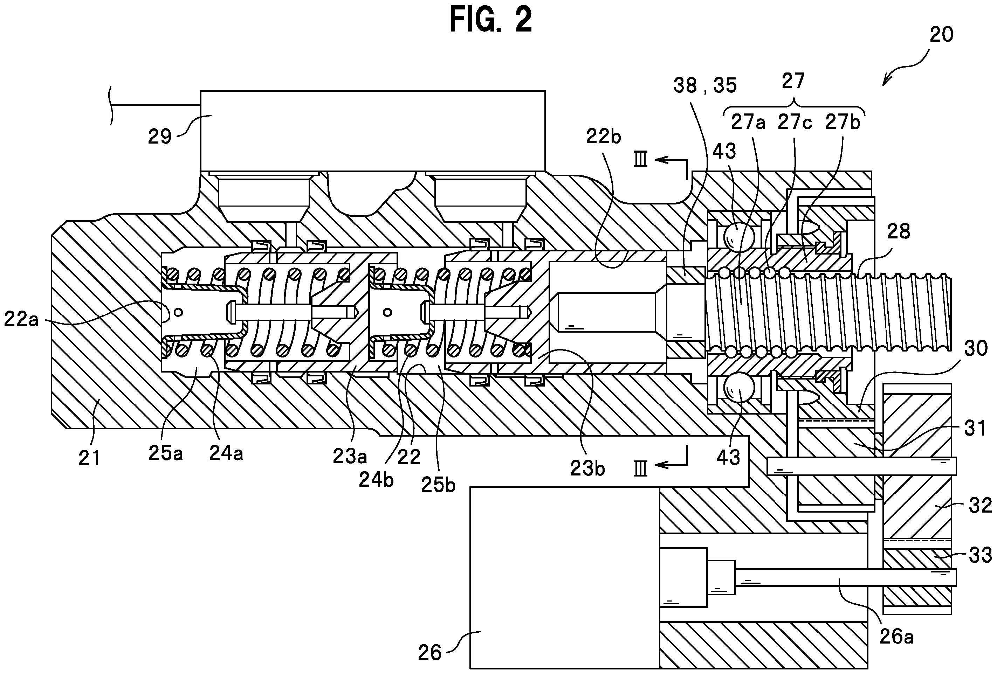

As shown in FIG. 2, the hydraulic pressure generation device 20 is of tandem type, and includes two slave pistons (a first slave piston 23a and a second slave piston 23b). The first slave piston 23a and the second slave piston 23b are inserted in a cylinder hole 22 formed inside a cylinder main body 21 as a base and arranged in series.

A second return spring 24b is arranged between the first slave piston 23a and the second slave piston 23b. In addition, a first return spring 24a is arranged between a bottom portion 22a of the cylinder hole 22 and the first slave piston 23a.

A second hydraulic pressure chamber 25b is formed between the first slave piston 23a and the second slave piston 23b. In addition, a first hydraulic pressure chamber 25a is formed between the bottom portion 22a of the cylinder hole 22 and the first slave piston 23a.

The hydraulic pressure generation device 20 includes a motor 26, which is an electric motor attached to the cylinder main body 21. In addition, the hydraulic pressure generation device 20 includes an electric brake device including a ball screw structure 27 as a drive transmitter which converts a rotational drive force of the motor 26 into an axial force in a linear direction and transmits the axial force to the second slave piston 23b. This electric brake device generates a brake hydraulic pressure by causing the first slave piston 23a and the second slave piston 23b to advance in the cylinder hole 22 by using the motor 26 as a drive source.

The ball screw structure 27 is included inside the cylinder main body 21. The ball screw structure 27 includes a shaft member (a ball screw shaft 27a), a nut member (a ball screw nut 27b), and a plurality of balls 27c.

The ball screw shaft 27a is provided to be screwed into the ball screw nut 27b via the balls 27c and capable of moving in an axial direction thereof (a direction along a center line CL, which is hereinafter also referred to simply as an "axial direction"). An end portion of the ball screw shaft 27a abuts on an end surface of the second slave piston 23b. In addition, in an outer periphery of the ball screw shaft 27a, a spiral recess groove 28 is formed. The ball screw shaft 27a is moved straight (displaced) in the axial direction to displace the second slave piston 23b in the axial direction of the cylinder hole 22.

The ball screw nut 27b is a nut member which is fitted onto the ball screw shaft 27a and rotates about the ball screw shaft 27a. The ball screw nut 27b is rotatably supported by a bearing 43 which is disposed inside the cylinder main body 21. On an outer periphery of the ball screw nut 27b, an outer gear 30 is coupled to be operable together. A rotation of a rotary shaft 26a of the motor 26 is transmitted to the outer gear 30 via a plurality of gears 31, 32, 33. That is, the rotation of the rotary shaft 26a of the motor 26 is transmitted to the ball screw nut 27b via the plurality of gears 31, 32, 33 and the outer gear 30.

The balls 27c are disposed between the recess groove 28 of the ball screw shaft 27a and a female thread provided in an inner periphery of the ball screw nut 27b. The balls 27c roll in the recess groove 28 in association with the rotation of the ball screw nut 27b and revolve around the outer periphery of the ball screw shaft 27a. Then, the balls 27c which are rolling and revolving send the spiral recess groove 28, and this moves straight and displace the ball screw shaft 27a in the axial direction.

In this way, the ball screw structure 27 rotates the ball screw nut 27b with the rotational drive force of the motor 26 to move straight the ball screw shaft 27a. In addition, the ball screw shaft 27a which is moved straight and displaced move straight (displace) the second slave piston 23b.

A speed reduction mechanism is configured with the plurality of gears 31, 32, 33 and the outer gear 30. The rotation speed of the rotary shaft 26a of the motor 26 is reduced by the speed reduction mechanism as appropriate and is transmitted to the ball screw nut 27b. Note that the speed reduction ratio (gear ratio) of the speed reduction mechanism is set as appropriate based on the performance of the motor 26, the performance required for the hydraulic pressure generation device 20, and the like. In addition, a belt mechanism may be used for the speed reduction mechanism.

The ball screw structure 27 has a detent mechanism unit 35 which prevents the rotation of the ball screw shaft 27a.

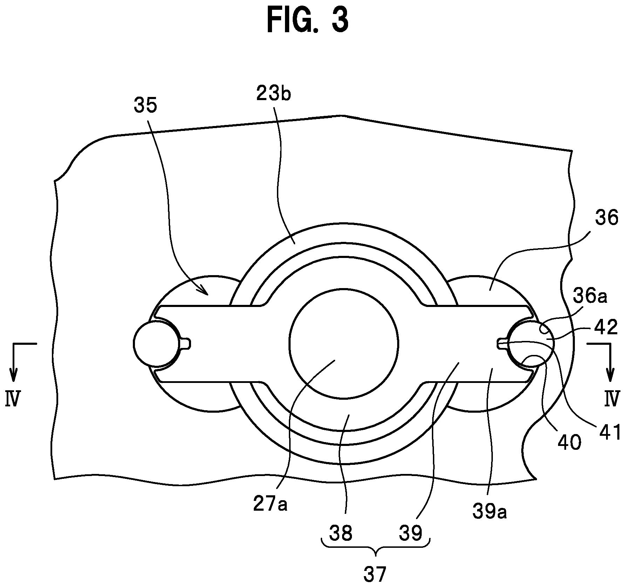

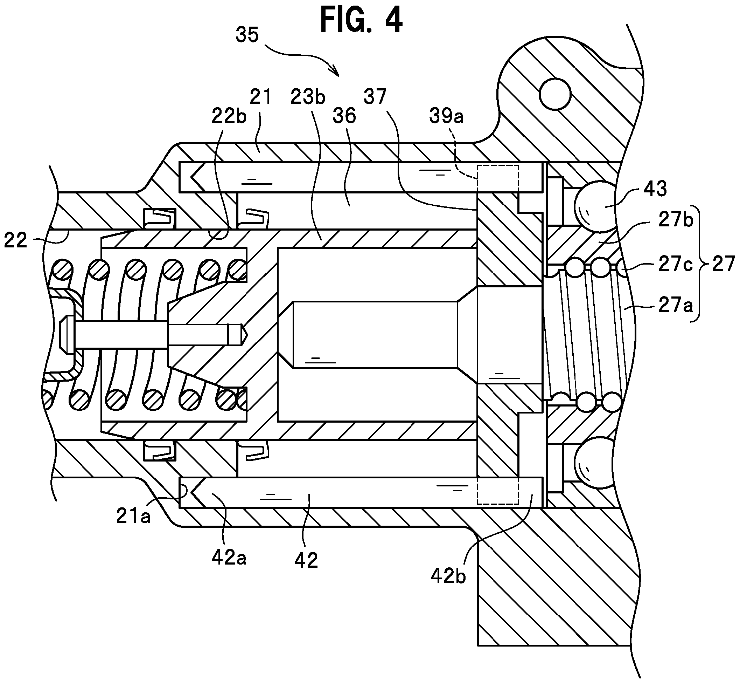

FIG. 3 is a sectional view taken along line III-III of FIG. 2. FIG. 4 is a sectional view taken along line IV-IV of FIG. 3.

As shown in FIG. 3 and FIG. 4, the detent mechanism unit 35 includes axial grooves 36, a rotation-regulating member 37, and guide pins 42. The axial grooves 36 are each formed, along the axial direction, in a sliding surface 22b of the cylinder hole 22 in which the second slave piston 23b slides. In the present embodiment, the axial grooves 36 are each formed in a recess shape in part of the sliding surface 22b of the cylinder hole 22 in the axial direction. Further, a pair of the axial grooves 36 are formed at positions opposite to each other in the sliding surface 22b of the cylinder hole 22.

The rotation-regulating member 37 is provided on the ball screw shaft 27a. Specifically, the rotation-regulating member 37 is fixed on an outer side in the radial direction on the front side relative to the recess groove 28 of the ball screw shaft 27a, for example, by press-fitting. The rotation-regulating member 37 includes a cylindrical main body 38 and protruding portions 39 which are continuously provided on an outer peripheral surface of the main body 38 and protrude outward from the outer peripheral surface in the radial direction. Here, a pair of the protruding portions 39 are provided on the outer peripheral surface of the main body 38 of the rotation-regulating member 37 corresponding to the pair of axial grooves 36. The pair of protruding portions 39 are provided at intervals of 180 degrees in a circumferential direction of the main body 38. Radially outer end portions 39a of the protruding portions 39 of the rotation-regulating member 37 are disposed in the axial grooves 36. In the radially outer end portions 39a, guided portions 40 are formed along the axial direction.

The guide pin 42 takes a straight bar shape and is disposed in the axial groove 36 along the axial direction. This guide pin 42 guides the rotation-regulating member 37 in the axial direction in a state where at least part of the guide pin 42 is in the guided portions 40. The guide pin 42 is disposed in a recess-shaped installation groove 36a which is formed in the axial groove 36 along the axial direction. As shown in FIG. 4, in the cylinder main body 21, holes 21a are formed along the axial direction of the cylinder hole 22. The hole 21a is formed in a recess shape in a front end surface of the axial groove 36. A front end portion 42a of the guide pin 42 is inserted in the hole 21a. An end surface of rear end portion 42b of the guide pin 42 is disposed to face a side surface of the outer race of the bearing 43 which rotatably supports the ball screw nut 27b.

In this embodiment, as shown in FIG. 3, the guided portion 40 is a recess-shaped guided groove which is formed in an end surface of the radially outer end portion 39a of the protruding portion 39 of the rotation-regulating member 37. According to this embodiment, the guided groove, for example, takes a circular arc shape around a single point in a section perpendicular to the axial direction. Then, a recess-shaped cutout groove 41 is formed in an inner surface of the guided portion 40 along the axial direction. According to this embodiment, the cutout groove 41, for example, takes a substantially rectangular shape in the section perpendicular to the axial direction.

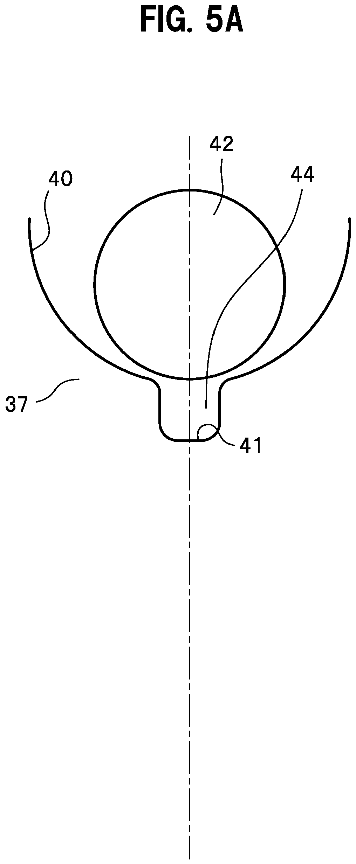

As shown in FIG. 5A, a clearance portion 44 in the radial direction of the ball screw shaft 27a is provided between the inner surface of the guided portion 40 of the rotation-regulating member 37 and the guide pin 42. The clearance portion 44 forms a space in the radial direction between the inner surface of the guided portion 40 and the guide pin 42 on the assumption that the inner surface of the guided portion 40 and the guide pin 42 approach and come into contact with each other in the radial direction. According to this embodiment, this clearance portion 44 is formed by the cutout groove 41.

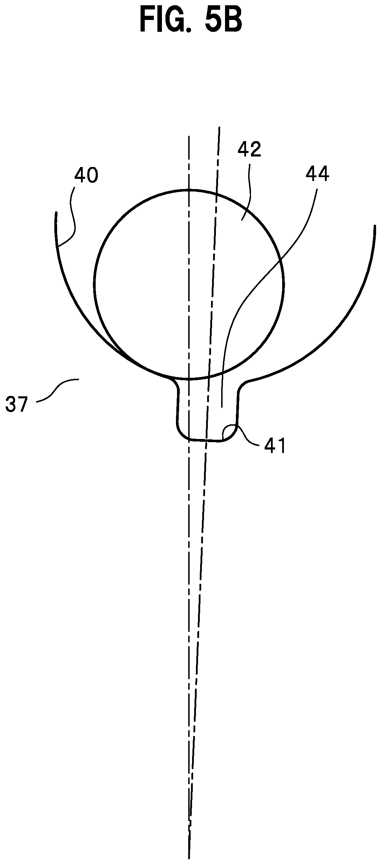

As shown in FIG. 5B, when the rotation-regulating member 37 provided on the ball screw shaft 27a is about to rotate, the inner surface of the guided portion 40 and the guide pins 42 abut on each other. That is, the guide pins 42 restricts the rotation of the ball screw shaft 27a about the center line CL by at least partly entering the guided portion 40. Further, when the ball screw shaft 27a is displaced in the axial direction, the rotation-regulating member 37 which is displaced together with the ball screw shaft 27a is guided by the guide pin 42.

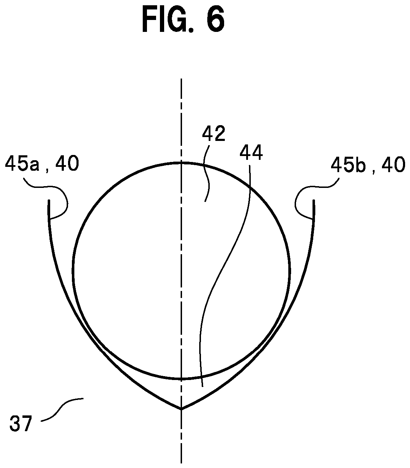

FIG. 6 is an enlarged sectional view showing a clearance portion 44 according to a modified embodiment.

In a modification shown in FIG. 6, the inner surface of the guided portion 40 is configured by connecting a plurality of arc surfaces 45a, 45b (two in this embodiment) each having a radius larger than the radius of the guide pin 42. That is, the inner surface of the guided portion 40 takes a so-called Gothic arc shape. In the case of this modification, the clearance portion 44 is formed between a pair of the arc surfaces 45a, 45b adjacent to each other and the guide pin 42.

Note that the cylinder main body 21 is equipped with a reservoir 29, and the brake fluid to be supplied to the cylinder main body 21 is reserved in the reservoir 29.

The motor 26 is driven based on a control signal inputted from the electronic control unit (not shown) to rotate the rotary shaft 26a. The rotation of the rotary shaft 26a is transmitted to the ball screw nut 27b via the plurality of gears 31, 32, 33 and the outer gear 30 to rotate (revolve) the ball screw nut 27b around the outer periphery of the ball screw shaft 27a. When the ball screw nut 27b rotates around the ball screw shaft 27a, the balls 27c roll. The balls 27c roll and circulate along the recess groove 28, which is spirally engraved in the outer periphery of the ball screw shaft 27a, to revolve around the ball screw shaft 27a. This causes the ball screw shaft 27a to displace in the axial direction.

In this way, the ball screw shaft 27a of the ball screw structure 27 is moved straight by the rotational drive force outputted by the motor 26.

When the ball screw shaft 27a is displaced in the direction of the bottom portion 22a of the cylinder hole 22, the second slave piston 23b is displaced in the direction of the bottom portion 22a to compress the second return spring 24b. Moreover, the first slave piston 23a is displaced in the direction of the bottom portion 22a by a reactive force of the second return spring 24b thus compressed.

Then, the brake fluid is compressed in the first hydraulic pressure chamber 25a and the second hydraulic pressure chamber 25b by the displacements of the first slave piston 23a and the second slave piston 23b, so that the brake hydraulic pressures are generated. The brake hydraulic pressure generated in the first hydraulic pressure chamber 25a is outputted to the communication hydraulic pressure line 9c. On the other hand, the brake hydraulic pressure generated in the second hydraulic pressure chamber 25b is outputted to the communication hydraulic pressure line 9d.

The brake hydraulic pressures generated in the first hydraulic pressure chamber 25a and the second hydraulic pressure chamber 25b of the hydraulic pressure generation device 20 are inputted to the hydraulic pressure control device 50 via the communication hydraulic pressure lines 9c, 9d and the main hydraulic pressure lines 9a, 9b shown in FIG. 1. Note that the hose (not shown) extending from the reservoir 3 (see FIG. 1) is connected to the reservoir 29.

The hydraulic pressure generation device 20 configured as shown in FIG. 2 generates brake hydraulic pressures in accordance with the amount of the depressing operation of the brake pedal P (see FIG. 1) with the drive of the motor 26. Further, the ball screw structure 27 included in the hydraulic pressure generation device 20 moves the ball screw shaft 27a straight in the axial direction with the rotational drive force outputted by the motor 26.

The hydraulic pressure control device 50 shown in FIG. 1 includes a configuration that is capable of executing antilock brake control (ABS control) which suppresses slip of the wheels, antiskid control and traction control which stabilize the behavior of the vehicle, and the like. The hydraulic pressure control device 50 is connected to a wheel cylinder W via a pipe member. Note that although not shown in the drawings, the hydraulic pressure control device 50 includes a hydraulic pressure unit provided with a solenoid valve, a pump, and the like, a motor for driving the pump, an electronic control unit for controlling the solenoid valve, the motor, and the like, and the like.

As described above, the hydraulic pressure generation device 20 according to this embodiment includes the electric brake device which generates a brake hydraulic pressure by causing the second slave piston 23b to advance in the cylinder hole 22. This electric brake device includes the ball screw structure 27 which converts the rotational drive force of the motor 26 into the axial force in the linear direction and transmits the axial force to the second slave piston 23b. The ball screw structure 27 includes: the rotatable ball screw nut 27b; and the ball screw shaft 27a which is provided to be screwed into the ball screw nut 27b and capable of moving in the axial direction and abuts on the second slave piston 23b. In addition, the ball screw structure 27 includes the detent mechanism unit 35 which prevents the rotation of the ball screw shaft 27a. The detent mechanism unit 35 includes: the axial grooves 36 which are formed, along the axial direction, in the sliding surface 22b of the cylinder hole 22 in which the second slave piston 23b slides; and the rotation-regulating member 37 which is provided on the ball screw shaft 27a. Then, the radially outer end portions 39a of the rotation-regulating member 37 are disposed in the axial grooves 36.

According to this embodiment, the ball screw shaft 27a is moved in the axial direction by the rotation of the ball screw nut 27b, and co-rotation of the ball screw shaft 27a is prevented by the detent mechanism unit 35 provided on the front side of the ball screw shaft 27a. Since the radially outer end portions 39a of the rotation-regulating member 37 provided on the ball screw shaft 27a are passed through the axial grooves 36 formed, along the axial direction, in the sliding surface 22b of the cylinder hole 22, an increase in axial length of the cylinder hole 22 can be suppressed.

Therefore, according to this embodiment, the hydraulic pressure generation device 20 in which the detent mechanism unit 35 can be provided on the front side of the ball screw shaft 27a, and an increase in axial length of the cylinder hole 22 can be suppressed is provided.

Moreover, the axial groove 36 is formed, along the axial direction, in the sliding surface 22b of the cylinder hole 22. With this configuration, since the second slave piston 23b can be held on a portion where no axial groove is formed in the sliding surface 22b of the cylinder hole 22, it is possible to suppress tilting of the second slave piston 23b and thus suppress abrasion.

Further, according to this embodiment, the axial groove 36 is formed in a recess shape in part of the sliding surface 22b of the cylinder hole 22 in the axial direction. In this configuration, since a more region where the second slave piston 23b is held by the sliding surface 22b of the cylinder hole 22 can be obtained, it is possible to further suppress the tilting of the second slave piston 23b.

Further, according to this embodiment, the guided portion 40 is formed, along the axial direction, in the radially outer end portion 39a of the rotation-regulating member 37. In this case, the detent mechanism unit 35 includes the guide pin 42 which is disposed in the axial groove 36 along the axial direction. This guide pin 42 guides the rotation-regulating member 37 in the axial direction with the guide pin 42 at least partly entering the guided portion 40. In this configuration, the guide pin 42 can prevent the rotation of the ball screw shaft 27a by at least partly entering the guided portion 40 of the rotation-regulating member 37 provided on the ball screw shaft 27a.

Further, according to this embodiment, the guide pin 42 is disposed in the recess-shaped installation groove 36a which is formed in the axial groove 36 along the axial direction. In this configuration, the guide pins 42 can be disposed inside the axial grooves 36 having the minimum size, and can be stably set in the installation grooves 36a formed in the axial grooves 36.

Further, according to this embodiment, the front end portion of the guide pin 42 is inserted in the hole 21a which is formed in the cylinder main body 21 along the axial direction. In this configuration, one end portion of the guide pin 42 can be supported, and the guide pin 42 can be positioned by restricting forward movement of the guide pin 42.

Further, according to this embodiment, the end surface of the rear end portion of the guide pin 42 is arranged to face the side surface of the outer race of the bearing 43 which rotatably supports the ball screw nut 27b. In this configuration, the guide pin 42 can be positioned by restricting backward movement of the guide pin 42.

Further, according to this embodiment, a pair of the axial grooves 36 are formed at positions opposite to each other in the sliding surface 22b of the cylinder hole 22, and a pair of the radially outer end portions 39a of the rotation-regulating member 37 are formed corresponding to the pair of axial grooves 36. In this configuration, the ball screw shaft 27a can be effectively and well-balancedly prevented from co-rotating with the rotation of the ball screw nut 27b.

Further, according to this embodiment, the clearance portion 44 in the radial direction is provided between the inner surface of the guided portion 40 and the guide pin 42. The clearance portion 44 forms a space in the radial direction between the inner surface of the guided portion 40 and the guide pin 42 in a case where the inner surface of the guided portion 40 and the guide pin 42 approach and come into contact with each other in the radial direction.

In this configuration, when the rotation of the ball screw shaft 27a is prevented by the detent mechanism unit 35, the clearance portion 44 provided between the inner surface of the guided portion 40 and the guide pin 42 can provide a place for a grease reservoir. Therefore, since it becomes possible to hold grease with the clearance portion 44 when the guided portion 40 and the guide pin 42 slide, stack (sticking) can be more surely avoided.

Therefore, in an electric actuator including the cylinder main body 21, the ball screw nut 27b, the ball screw shaft 27a, and the detent mechanism unit 35, stack between members which slide in the detent mechanism unit 35 can be avoided.

Further, according to this embodiment, the guided portion 40 is a recess-shaped guided groove which is formed in the end surface of the radially outer end portion 39a of the rotation-regulating member 37. The recess-shaped cutout groove 41 is formed in the inner surface of this guided groove along the axial direction, and the clearance portion 44 is formed by the cutout groove 41. In this configuration, since grease can be held by the cutout groove 41, stack can be more surely avoided. In addition, since stack can be more surely avoided, the degree of freedom in design about the abutting between the guide pin 42 and the rotation-regulating member 37 increases. This makes it possible to adjust the gap between these, as well as, the position and angle at which these abut on each other. Moreover, reduction in size and improvement in abrasion resistance of the product can be achieved by adjusting the abutting angle between these.

The inner surface of the guided portion 40 may be configured by connecting a plurality of arc surfaces 45a, 45b each having a radius larger than a radius of the guide pin 42. In this case, the clearance portion 44 is formed between a pair of the arc surfaces 45a, 45b adjacent to each other and the guide pin 42. In this configuration, since grease can be held between the pair of arc surfaces 45a, 45b adjacent to each other and the guide pin 42, stack can be more surely avoided. In addition, since stack can be more surely avoided, the degree of freedom in design about the abutting between the guide pin 42 and the rotation-regulating member 37 increases. This makes it possible to adjust the gap between these, as well as, the position and angle at which these abut on each other. Moreover, reduction in size and improvement in abrasion resistance of the product can be achieved by adjusting the abutting angle between these.

Note that a configuration in which the inner surface of the guided portion 40 is configured by connecting a plurality of arc surfaces 45a, 45b and a recess-shaped cutout groove 41 is formed in this inner surface along the axial direction is also possible.

Although the present invention has been described based on the embodiments so far, the present invention is not limited to the configurations described in the above embodiments, and the configurations can be modified as appropriate without departing from the gist of the present invention.

For example, the hydraulic pressure generation device 20 may be of single type having one piston. Further, the hydraulic pressure generation device 20 may be configured to include any of components included in the master cylinder 1, the stroke simulator 2, and the hydraulic pressure control device 50.

### Reference Signs List

- 20: hydraulic pressure generation device
- 21: cylinder main body (base)
- 21a: hole
- 22: cylinder hole
- 22b: sliding surface
- 23a: first slave piston
- 23b: second slave piston (piston)
- 26: motor
- 27: ball screw structure (drive transmitter)
- 27a: ball screw shaft (shaft member)
- 27b: ball screw nut (nut member)
- 35: detent mechanism unit
- 36: axial groove
- 36a: installation groove
- 37: rotation-regulating member
- 39a: radially outer end portion
- 40: guided portion
- 41: cutout groove
- 42: guide pin
- 42a: front end portion
- 42b: rear end portion
- 43: bearing
- 44: clearance portion

- 45a, 45b: arc surface

## Claims

1. A hydraulic pressure generation device comprising:
a base to which a motor is attached; and
an electric brake device which generates a brake hydraulic pressure by causing a piston to advance in a cylinder hole formed in the base by using the motor as a drive source, wherein
the electric brake device includes a drive transmitter which converts a rotational drive force of the motor into an axial force in a linear direction and transmits the axial force to the piston,
the drive transmitter includes: a nut member which rotates upon receipt of the rotational drive force of the motor; a shaft member which is provided to be screwed into the nut member and capable of moving in an axial direction and abuts on the piston; and a detent mechanism unit which prevents rotation of the shaft member,
the detent mechanism unit includes: an axial groove which is formed, along the axial direction, in a sliding surface of the cylinder hole in which the piston slides; and a rotation-regulating member which is provided on the shaft member, and
a radially outer end portion of the rotation-regulating member is disposed in the axial groove.

2. The hydraulic pressure generation device according to claim 1, wherein the axial groove is formed in a recess shape in part of the sliding surface of the cylinder hole in the axial direction.

3. The hydraulic pressure generation device according to claim 1, wherein
a guided portion is formed, along the axial direction, in the radially outer end portion of the rotation-regulating member, and
the detent mechanism unit includes a guide pin which is disposed in the axial groove along the axial direction and guides the rotation-regulating member in the axial direction with the guide pin at least partly entering the guided portion.

4. The hydraulic pressure generation device according to claim 3, wherein the guide pin is disposed in a recess-shaped installation groove which is formed in the axial groove along the axial direction.

5. The hydraulic pressure generation device according to claim 3, wherein a front end portion of the guide pin is inserted in a hole which is formed in the base along the axial direction.

6. The hydraulic pressure generation device according to claim 5, wherein an end surface of a rear end portion of the guide pin is arranged to face a side surface of an outer race of a bearing which rotatably supports the nut member.

7. The hydraulic pressure generation device according to claim 1, wherein
a pair of the axial grooves are formed at positions opposite to each other in the sliding surface of the cylinder hole, and
a pair of the radially outer end portions of the rotation-regulating member are formed corresponding to the pair of axial grooves.

8. The hydraulic pressure generation device according to claim 3, wherein
a clearance portion in a radial direction is provided between an inner surface of the guided portion and the guide pin,
the clearance portion forms a space in the radial direction between the inner surface of the guided portion and the guide pin in a case where the inner surface of the guided portion and the guide pin approach and come into contact with each other in the radial direction.

9. The hydraulic pressure generation device according to claim 8, wherein
the guided portion is a recess-shaped guided groove which is formed in an end surface of the radially outer end portion of the rotation-regulating member,
a recess-shaped cutout groove is formed in an inner surface of the guided groove along the axial direction, and
the clearance portion is formed by the cutout groove.

10. The hydraulic pressure generation device according to claim 8, wherein
the inner surface of the guided portion is configured by connecting a plurality of arc surfaces each having a radius larger than a radius of the guide pin, and
the clearance portion is formed between a pair of the arc surfaces adjacent to each other and the guide pin.
